# EUROPEAN PATENT APPLICATION

(11) **EP 3 360 849 A1**
(43) Date of publication of application: **15.08.2018**
(21) Application number: 16853400.6
(22) Date of filing: 15.09.2016
(51) Int. Cl.: C01B 32/25, C23C 18/52

(54) **METHOD FOR RECOVERING NANODIAMOND FROM PLATING SOLUTION**

(30) Priority: 08.10.2015 JP 2015200429
(71) Applicant: Daicel Corporation, Osaka-shi, Osaka 530-0011 (JP)
(72) Inventor: KIMOTO, Norihiro, Himeji-shi Hyogo 671-1283 (JP)
(74) Representative: Grünecker Patent- und Rechtsanwälte PartG mbB
(86) International application number: PCT/JP2016/077262
(87) International publication number: WO 2017/061246

(57) **Abstract**

Provided is a method for recovering nanodiamond particles, in a state usable for reuse, from a plating solution used forming a composite plating containing nanodiamond particles. The nanodiamond recovering method according to the present invention typically includes a centrifugal separation step (S4), a washing step (S5), and a centrifugal separation step (S6). In the centrifugal separation step (S4), a plating solution containing nanodiamond particles dispersed as primary particles and metal particles is separated into a first precipitated fraction and a first supernatant fraction by a centrifugal separation treatment, from which the first precipitated fraction is collected. In the washing step (S5), the first precipitated fraction is combined with and washed with water. In the centrifugal separation step (S6), a fluid undergone the washing step (S5) is separated by a centrifugal separation treatment into a second precipitated fraction and a second supernatant fraction, from which the second supernatant fraction is collected.

## Description

### Technical Field

The present invention relates to a method for recovering nanodiamond from a plating solution that has been used for the formation of a nanodiamond-containing composite plating. This application claims priority to Japanese Patent Application No. 2015-200429, filed on October 8, 2015, the entire contents of which are incorporated herein by reference.

### Background Art

Composite plating may be used as a means for surface modification of parts and structures. Such a composite plating is a plating including a metal matrix, and fine particles dispersed in the matrix. The composite plating can be formed by allowing a plating (layer) to grow in such a manner that a metallic material is deposited on an article, such as a part or component, to be surface-modified, while taking in fine particles. The composite plating is expected to offer properties which are combinations of the properties derived from the matrix metal and the properties derived from the dispersed fine particles. Techniques relating to such composite plating can be found typically in Patent Literature (PTL) 1, PTL 2, and PTL 3 below.

On the other hand, diamond materials in the form of fine particles, called nanodiamonds, have been increasingly developed. Of such nanodiamonds, so-called single-nano-sized nanodiamonds having a particle diameter of 10 nm or less may be required in some uses.

### Citation List

### Patent Literature

PTL 1: Japanese Unexamined Patent Application Publication (JP-A) No. 2012-135921
PTL 2: JP-A No. 2013-099920
PTL 3: JP-A No. 2014-152908

### Summary of Invention

### Technical Problem

Nanodiamonds having a primary particle diameter of 10 nm or less can offer properties such as high mechanical strengths, high thermal conductivity, and high refractive index, as with bulk diamond. The nanodiamonds, which are fine particles, generally include a large proportion of surface atoms (coordinationally unsaturated) and are thereby liable to aggregate, because of a high magnitude of van der Waals force in total, which can act upon between surface atoms of adjacent particles. In addition, the nanodiamond particles undergo an agglutination phenomenon in which the particles aggregate (agglutinate) very firmly by the contribution of Coulomb interactions between crystal faces of adjacent crystallites. The nanodiamonds have unique properties in which multiple interactions can occur between crystallites or primary particles, as described above. Thus, there are often technical difficulties in developing a state in which nanodiamond primary particles are dispersed typically in a medium, and in maintaining the dispersed state. The nanodiamonds are products prepared typically by a detonation technique. The nanodiamonds are initially present in the form of agglutinates (secondary particles) formed by aggregation (agglutination) of primary particles through very strong interactions between the primary particles. Thus, there are technical difficulties in deagglutinating the primary particles from the secondary particles, and in maintaining the dispersed state of the primary particles in a desired medium.

The present invention has been made under these circumstances and has an object to provide a method for recovering, from a plating solution, nanodiamond particles in a state suitable for reuse, where the plating solution has been used for the formation of a composite plating containing nanodiamond particles. The present invention has another object to provide nanodiamond particles recovered by the method, and to provide a nanodiamond dispersion containing the nanodiamond particles.

### Solution to Problem

The present invention provides, according to a first aspect, a method for recovering nanodiamond from a plating solution. This method includes a first centrifugal separation step, a washing step, and a second centrifugal separation step. The first centrifugal separation step is the step of separating a plating solution into a first precipitated fraction and a first supernatant fraction by a centrifugal separation treatment, and collecting the first precipitated fraction, where the plating solution contains nanodiamond particles dispersed as primary particles, and metal particles. The washing step is the step of combining and washing, with water, the first precipitated fraction. The second centrifugal separation step is the step of separating a fluid undergone the washing step into a second precipitated fraction and a second supernatant fraction by a centrifugal separation treatment, and collecting the second supernatant fraction.

A plating solution includes various components corresponding to a plating to be formed, and at least part of the components are dissolved, as electrolytes, in the plating solution. In contrast, a plating solution after use as a plating bath includes metal particles, which are by-produced in the bath during a plating process of an article to be plated, such as a member. The metal particles are coarse as compared with nanodiamond primary particles and other components in the plating solution. The plating solution to be subjected to the first centrifugal separation step of the method according to the aspect includes nanodiamond particles, which are dispersed as primary particles; by-produced metal particles; and other components in the form typically of electrolytes. In the first centrifugal separation step of the method according to the aspect, the plating solution as above is subjected to a centrifugal separation treatment. In the centrifugal separation treatment, coarse metal particles are liable to settle out. In addition, the nanodiamond primary particles are also liable to settle out in the centrifugal separation treatment, as triggered by the centrifugal action. This is because the nanodiamond primary particles in this treatment are in a relatively unstable dispersed state in such a chemical environment including various electrolytes being dissolved in the solution. Accordingly, the first precipitated fraction resulting from the centrifugal separation treatment in the first centrifugal separation step mainly includes nanodiamond particles and metal particles, whereas the first supernatant fraction mainly includes other components in the form typically of electrolytes. The first precipitated fraction including nanodiamond particles and metal particles is separated from the first supernatant fraction including electrolytes, then combined with and washed with water (washing step). In the second centrifugal separation step of the method according to the aspect, the resulting fluid undergone the washing step is subjected to a centrifugal separation treatment. In this centrifugal separation treatment, coarse metal particles are liable to settle out. In contrast, nanodiamond primary particles tend to resist settling out in the centrifugal separation treatment. This is because the nanodiamond primary particles in this treatment are in a chemical environment, from which most of the electrolytes have been removed by the centrifugal separation treatment in the first centrifugal separation step, and such nanodiamond primary particles tend to be separated from each other and to continue to be in a dispersed state as colloidal particles. Accordingly, the second precipitated fraction resulting from the centrifugal separation treatment in the second centrifugal separation step mainly includes metal particles, whereas the second supernatant fraction mainly includes nanodiamond primary particles. In the second centrifugal separation step, the second supernatant fraction including nanodiamond primary particles is separated from the second precipitated fraction including metal particles. Thus, nanodiamond primary particles can be recovered from the nanodiamond-containing plating solution after use.

Assume that metal particles by-produced in a plating bath mix with another fresh plating bath prepared for another plating treatment. In this case, the metal particles may impede plating reaction and/or plating growth using this plating bath. To eliminate or minimize this, there may be taken an action of dissolving by-produced metal particles included in a plating solution after use by an acid treatment, in recycling of the plating solution and/or in a regeneration treatment of components of the plating solution. However, such an acid treatment often impedes nanodiamond primary particles from dispersing and is disadvantageous for recovering nanodiamond primary particles, without agglutination, from the plating solution. The method according to the aspect does not have to perform such an acid treatment, in the isolation of nanodiamond primary particles from metal particles.

As described above, with the nanodiamond recovering method according to the first aspect of the present invention, nanodiamond particles can be recovered, in a state suitable for reuse, from a plating solution used for the formation of a composite plating containing nanodiamond particles. Specifically, the method according to the aspect is suitable for recovering, from a plating solution, nanodiamond particles in such a state that nanodiamonds are dispersed as primary particles; and that the recovered primary particles have a lower content of by-produced metal particles.

The nanodiamond recovering method according to the first aspect of the present invention preferably includes, upstream from the first centrifugal separation step, a filtration step of filtering the plating solution. This configuration allows the first centrifugal separation step and downstream steps to be performed after coarse metal particles having particle sizes at a certain level or greater are removed from the plating solution to be subjected to the first centrifugal separation step. This configuration is therefore advantageous for performing the nanodiamond particle recovery operation more efficiently.

The present invention also provides, according to a second aspect, a method for recovering nanodiamond from a plating solution. This method includes a static separation step, a first washing step, a first centrifugal separation step, a second washing step, and a second centrifugal separation step. The static separation step is the step of separating a plating solution into a first precipitated fraction and a first supernatant fraction by a standing treatment, and collecting the first precipitated fraction, where the plating solution contains nanodiamond particles dispersed as primary particles, and metal particles. The first washing step is the step of combining and washing, with water, the first precipitated fraction. The first centrifugal separation step is the step of separating a fluid undergone the first washing step into a second precipitated fraction and a second supernatant fraction by a centrifugal separation treatment, and collecting the second precipitated fraction. The second washing step is the step of combining and washing, with water, the second precipitated fraction. The second centrifugal separation step is the step of separating a fluid undergone the second washing step into a third precipitated fraction and a third supernatant fraction by a centrifugal separation treatment, and collecting the third supernatant fraction.

The plating solution to be subjected to the static separation step of the method according to the aspect contains nanodiamond particles dispersed as primary particles; metal particles by-produced in the plating process; and other components in the form typically of electrolytes. In the static separation step of the method according to the aspect, the plating solution as above is subjected to a standing treatment, from which a first precipitated fraction (sedimentary fluid) including settled nanodiamond particles and settled metal particles is fractionated. The first precipitated fraction, in which nanodiamond particles and metal particles are enriched, is combined with and washed with water (first washing step). In the first centrifugal separation step of the method according to the aspect, a fluid undergone the first washing step is subjected to a centrifugal separation treatment. In this centrifugal separation treatment, coarse metal particles are liable to settle out. Nanodiamond primary particles are also liable to settle out in the centrifugal separation treatment, as triggered by the centrifugal action. This is because the nanodiamond primary particles in this treatment are in a relatively unstable dispersed state in such a chemical environment where significant amounts of electrolytes still remain or are dissolved in the solution (fluid). Accordingly, the second precipitated fraction resulting from the centrifugal separation treatment in the first centrifugal separation step mainly includes nanodiamond particles and metal particles, whereas the second supernatant fraction mainly includes other components in the form typically of electrolytes. The second precipitated fraction including nanodiamond particles and metal particles, after being separated from the second supernatant fraction including electrolytes, is combined with and washed with water (second washing step). In the second centrifugal separation step of the method according to the aspect, a fluid undergone (resulting from) the second washing step is subjected to a centrifugal separation treatment. In this centrifugal separation treatment, coarse metal particles are liable to settle out. In contrast, nanodiamond primary particles resist settling out in the centrifugal separation treatment. This is because the nanodiamond primary particles in this treatment are in a chemical environment from which most of electrolytes have been removed by the static separation step and by the centrifugal separation treatment in the first centrifugal separation step, and tend to be separated from each other and to still remain in a dispersed state as colloidal particles. Accordingly, the second precipitated fraction resulting from the centrifugal separation treatment in the third centrifugal separation step mainly includes metal particles, whereas the third supernatant fraction mainly includes nanodiamond primary particles. In the second centrifugal separation step, the third supernatant fraction including nanodiamond primary particles is then separated from the third precipitated fraction including metal particles. Thus, nanodiamond primary particles can be recovered from the nanodiamond-containing plating solution after use.

As described above, metal particles by-produced in the plating bath, if mixing with a fresh plating bath prepared for another plating treatment, may adversely affect the plating reaction and/or plating growth using this plating bath. To eliminate or minimize this, there may be taken an action of dissolving the by-produced metal particles included in a plating solution after use by an acid treatment, in recycling of the plating solution and/or in a regeneration treatment of components of the plating solution. However, such an acid treatment often impedes nanodiamond primary particles from dispersing and is disadvantageous for recovering nanodiamond primary particles, without agglutination, from a plating solution. The method according to the aspect does not have to perform such an acid treatment, in the isolation of nanodiamond primary particles from metal particles.

As described above, with the nanodiamond recovering method according to the second aspect of the present invention, nanodiamond particles can be recovered, in a state suitable for reuse, from a plating solution used for the formation of a composite plating containing nanodiamond particles. Specifically, the method according to the aspect is suitable for recovering, from a plating solution, nanodiamond particles in such a state that nanodiamonds are dispersed as primary particles; and that the recovered primary particles have a lower content of by-produced metal particles.

In the static separation step in the second aspect of the present invention, the plating solution is left standing for preferably 5 hours or longer, more preferably 10 hours or longer, and furthermore preferably 15 hours or longer. This configuration is advantageous for sufficiently separating the first precipitated fraction and the first supernatant fraction from each other.

The nanodiamond recovering method according to the second aspect of the present invention preferably includes, upstream from the static separation step, a filtration step of filtering the plating solution. This configuration enables the static separation step and downstream steps to be performed after coarse metal particles having particle sizes at a certain level or greater are removed from the plating solution to be subjected to the static separation step. The configuration is therefore advantageous for performing the nanodiamond recovery operation more efficiently.

In the first and second aspects of the present invention, the filtration means (filtration process or device) for use in the filtration step may have a fractionation size of preferably 50 µm or less, more preferably 30 µm or less, furthermore preferably 20 µm or less, still more preferably 10 µm or less, and still furthermore preferably 5 µm or less. This kind of configuration is advantageous for performing the nanodiamond recovery operation more efficiently.

In the first and second aspects of the present invention, the centrifugation in at least one of the centrifugal separation treatment in the first centrifugal separation step and the centrifugal separation treatment in the second centrifugal separation step is performed at a force of preferably 1000 × g or more, more preferably 2000 × g or more, and furthermore preferably 3000 × g or more. This is preferred from the viewpoint of providing sufficient solid-liquid separation.

In the first and second aspects of the present invention, the centrifugation in at least one of the centrifugal separation treatment in the first centrifugal separation step and the centrifugal separation treatment in the second centrifugal separation step is performed for preferably one minute or longer, more preferably 5 minutes or longer, furthermore preferably 10 minutes or longer, and still more preferably 30 minutes or longer, from the viewpoint of providing sufficient solid-liquid separation.

In the first and second aspects of the present invention, the plating solution is preferably alkaline. More preferably, the plating solution has a pH of 8 to 11. The nanodiamond particles exhibit a zeta potential of preferably -60 to -20 mV, and more preferably -50 to -30 mV in an aqueous dispersion having a nanodiamond concentration of 0.2 mass percent and a pH of 9. These configurations are advantageous for restraining or avoiding the aggregation of nanodiamond particles.

In the first and second aspects of the present invention, the plating solution preferably has a composition for nickel-based plating formation. The resulting recovered nanodiamond particles, when in a powdery state, have a nickel content of preferably 10000 ppm by mass or less, and more preferably 8500 ppm by mass or less. These configurations are advantageous for reusing of dispersed nanodiamond primary particles, which are recovered by the method according to one of the aspects, typically as a component of a plating solution for nickel-based plating formation.

In the first and second aspects of the present invention, nanodiamond particles to be recovered preferably have a particle diameter D50 (median diameter) of 4 to 9 nm in a nanodiamond dispersion containing the nanodiamond particles. The nanodiamond dispersion is preferably an aqueous nanodiamond dispersion that includes water as a principal component of a dispersion medium, where the water is present in an amount of 50 mass percent or more of the totality of the dispersion medium. These configurations are advantageous for reusing dispersed nanodiamond primary particles, which are recovered by the method according to one of the aspects, typically as a component of a plating solution. The particle diameter D50 can be measured typically by dynamic light scattering technique.

The present invention provides, according to a third aspect, nanodiamond particles. The nanodiamond particles are recovered by the method according to the first aspect of the present invention and/or the method according to the second aspect of the present invention. The nanodiamond particles, when in a powdery state, have a nickel content of 10000 ppm by mass or less, and preferably 8500 ppm by mass or less. The nanodiamond particles are advantageous for reusing as a component of a plating solution for nanodiamond-containing nickel-based plating formation.

The present invention provides, according to a fourth aspect, a nanodiamond dispersion. The nanodiamond dispersion includes nanodiamond particles and a dispersion medium. The nanodiamond particles have been recovered by the method according to the first aspect of the present invention and/or the method according to the second aspect of the present invention. The nanodiamond particles dispersed in the dispersion medium have a particle diameter D50 of 4 to 9 nm. The dispersion medium preferably includes water as a principal component in an amount of 50 mass percent or more. The recovered nanodiamond particles, when in a powdery state, have a nickel content of 10000 ppm by mass or less, and preferably 8500 ppm by mass or less. The nanodiamond dispersion as above is usable typically as a nanodiamond feedstock for the preparation of a plating solution for nanodiamond-containing nickel-based plating formation.

### Brief Description of Drawings

FIG. 1 is a process chart of an exemplary method for forming a nanodiamond-containing plating;
FIG. 2 is a schematic cross-sectional view of a nanodiamond-containing plating;
FIG. 3 is a process chart of a method according to one embodiment of the present invention for recovering nanodiamonds; and
FIG. 4 is a schematic enlarged view of a nanodiamond dispersion according to an embodiment, where the nanodiamond dispersion contains nanodiamond particles recovered by a nanodiamond recovering method according to an embodiment of the present invention.

### Description of Embodiments

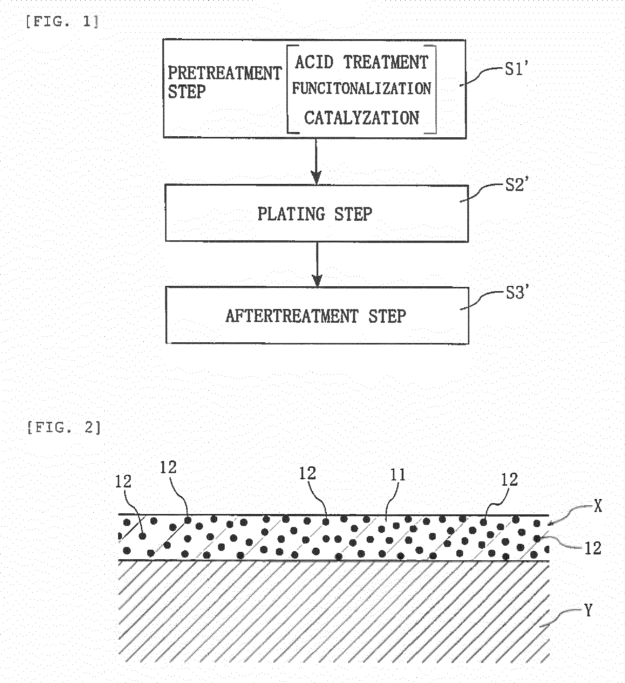

FIG. 1 is a process chart of an exemplary method for forming a nanodiamond-containing plating. This method includes a pretreatment step S1', a plating step S2', and an aftertreatment step S3'.

The pretreatment step S1' is the step of subjecting a member to one or more pretreatments, where the member is to be immersed in a plating bath in the plating step S2'. The pretreatments are performed so as to allow the member to be in a state suitable for selectively depositing plating to form a plating (plating film or layer) with good adhesion on the member by electroless plating in the plating step S2'. The pretreatment step S1' includes, for example, an acid treatment substep, a functionalization substep, and a catalyzation substep. The member is a part (component) or structure to which surface modification is applied. The member may be made of a metal or from a resin.

The acid treatment substep is the step to remove a surface oxide film from the member to be plated (in particular, in the case of a metallic member), or to perform surface roughening etching of the member (in particular, in the case of a resinous member). In the acid treatment substep, for example, the member undergone degreasing and subsequent water washing, which are performed as needed, is immersed in an acid treatment chemical. Non-limiting examples of the acid treatment chemical include hydrochloric acid and an aqueous sulfuric acid solution. The hydrochloric acid, when employed, may have a hydrochloric acid concentration of typically 5 to 20 mass percent. The aqueous sulfuric acid solution, when employed, may have a sulfuric acid concentration of typically 5 to 10 mass percent. The acid treatment may be performed at a temperature of typically from room temperature to 50°C for a time of typically 1 to 60 minutes. After the acid treatment substep as above, the member is washed with water.

The functionalization substep is the step to allow the member surface to be in such a state as to readily adsorb an electroless plating catalyst. In the functionalization substep, for example, the member undergone the acid treatment substep and subsequent water washing is immersed in a functionalization chemical. When palladium is employed as the catalyst, a non-limiting example of the functionalization chemical for use herein is a solution of tin chloride in hydrochloric acid. The tin chloride hydrochloric acid solution, when employed, may have a tin concentration of typically 0.1 to 5 mass percent. The functionalization may be performed at a temperature of typically from room temperature to 40°C for a time of typically 0.5 to 10 minutes. After the functionalization substep as above, the member is washed with water.

The catalyzation substep is the step to allow the member surface to adsorb the electroless plating catalyst. In the catalyzation substep, for example, the member undergone the functionalization substep and subsequent water washing is immersed in a catalyzation chemical. When palladium is employed as the catalyst, a non-limiting example of the catalyzation chemical usable herein is a solution of palladium chloride in hydrochloric acid. The palladium chloride hydrochloric acid solution, when employed, may have a palladium concentration of typically 0.01 to 1 mass percent. The catalyzation may be performed at a temperature of typically from room temperature to 40°C for a time of typically 0.5 to 10 minutes. After the catalyzation substep, the member is washed with water.

When palladium is employed as the catalyst, the pretreatment step S1' may employ a so-called one-component process instead of the so-called two-component process as above. In the two-component process, the member undergoes a functionalization substep and a catalyzation substep as above. In the one-component-process, the member is allowed to react with, and adsorb a chemical in which colloidal particles including palladium and tin are dispersed, and then tin is removed. Assume that the member has such a surface as to offer properties of allowing plating to be deposited selectively with good adhesion, such as a fresh nickel surface. In this case, the functionalization substep and the catalyzation substep as above can be skipped.

After the pretreatment step S1' typically as above, the plating step S2' is performed. In the plating step S2', the member is immersed in a plating bath. The plating bath may have, for example, a composition for nickel-based plating formation. The plating bath as above has a composition typically for electroless nickel-phosphorus alloy plating formation, and which composition further includes nanodiamond particles (ND particles) to be dispersed as primary particles. The plating bath contains, in addition to ND particles dispersed as primary particles, other components such as a nickel source, a phosphorus source, a reducing agent, and a complexing agent.

Non-limiting examples of the nickel source contained in the plating bath include nickel sulfate and nickel chloride. The plating bath may have a nickel source concentration of typically 0.01 to 0.5 mol/L, in terms of concentration of nickel ion to be fed to the plating bath.

Non-limiting examples of the reducing agent serving also as the phosphorus source in the plating bath include phosphinates such as sodium phosphinate. The plating bath may have a concentration of a phosphinate, when employed, of typically 0.02 to 0.5 mol/L.

Non-limiting examples of the complexing agent contained in the plating bath include citric acid, lactic acid, malic acid, glycolic acid, and salts of them. Non-limiting examples of the salt of citric, or citrate, include sodium citrate and potassium citrate. When at least one of citric acid and a salt thereof is employed, the plating bath may have a concentration of the at least one of citric acid and a salt thereof of typically 0.02 to 1.0 mol/L.

The ND particles contained in the plating bath are nanodiamond primary particles having a particle diameter of 10 nm or less and being separated from each other and dispersed as colloidal particles in the plating bath. The ND particles may for example be so-called detonation nanodiamond particles (nanodiamond particles formed by detonation technique). The detonation technique enables appropriate formation of nanodiamonds having a primary particle diameter of 10 nm or less. With a decreasing particle diameter of the ND particles, the resulting nanodiamond-containing plating tends to more effectively enjoy the number density effect of the ND particles as nanoparticles. On the other hand, the lower limit of the particle diameter of the ND particles in the plating bath is typically 1 nm. The nanodiamond primary particle diameter can be measured typically by dynamic light scattering technique. The plating bath may have a ND particle concentration of typically 0.1 to 20 g/L.

The plating bath may further contain one or more other components, in addition to the above-mentioned components. Non-limiting examples of the components include pH buffers, and stabilizers for restraining self-decomposition of the plating bath.

The plating bath can be prepared typically by mixing an aqueous nanodiamond dispersion containing nanodiamond particles dispersed as primary particles with an aqueous solution containing the other component(s), and adjusting the pH of the resulting mixture. The plating bath has a pH of typically 5 to 11.

In the plating step S2', for example, the member undergone the pretreatment step S1' is immersed in the plating bath having the composition as above, while supplying an oxygen-containing gas to the plating bath by bubbling, and while stirring the plating bath typically with a magnetic stirrer. In the plating bath, a plating grows on the member. Specifically, the plating matrix grows on the member so that a nickel-phosphorus alloy is deposited while including the ND particles dispersed as primary particles in the plating bath. A non-limiting example of the oxygen-containing gas for use herein is air. The air, when used as the oxygen-containing gas, may be fed at a rate of typically 0.05 to 1.0 L/min. to the plating bath in the plating step S2'. The magnetic stirrer, when used for stirring of the plating bath, may be used at a stirring rate of typically 100 to 200 rpm. In the plating step S2', the immersion of the member in the plating bath may be performed at a plating bath temperature of typically 50°C to 100°C for a time of typically 15 to 120 minutes.

After the plating step S2', the aftertreatment step S3' is performed. In the aftertreatment step S3', the member bearing a plating, which is formed thereon in the plating step S2', is washed with water and then dried.

The nanodiamond-containing plating can be formed in the above manner. FIG. 2 illustrates a member Y bearing a plating X formed thereon by the method described above with reference to FIG. 1. The plating X is a composite plating including both a matrix 11 and ND particles 12. The matrix 11 may for example be a nickel-phosphorus alloy matrix. The ND particles 12 are the nanodiamond primary particles having a particle diameter of 10 nm or less. The plating X may contain other particles in addition to the ND particles 12. Non-limiting examples of the other particles include aggregates (secondary particles) of nanodiamond primary particle. The plating X may have a nanodiamond content typically 0.5 to 1.5 mass percent, where the nanodiamond content includes the content of the ND particles 12 and the content of nanodiamond secondary particles. The plating X may have a thickness of typically 1.5 to 2.5 µm. The plating X having the configuration as above is advantageous for actually providing high hardness, because of containing the nanodiamond particles, which can offer high mechanical strength.

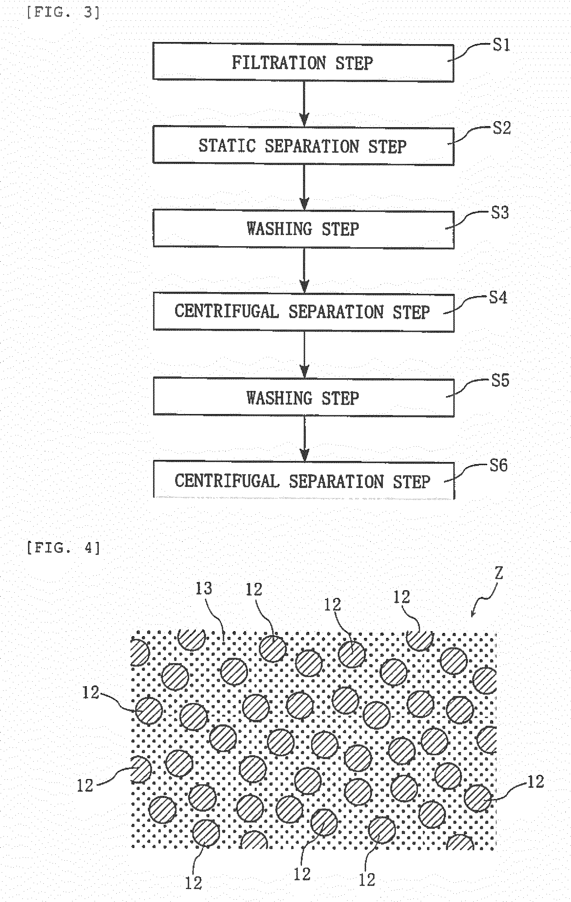

FIG. 3 is a process chart of a nanodiamond recovering method according to one embodiment of the present invention. The nanodiamond recovering method as illustrated in FIG. 3 is a method for recovering nanodiamond particles from a nanodiamond-containing plating solution typically after use in the method for forming a plating. The nanodiamond recovering method includes a filtration step S1, a static separation step S2, a washing step S3, a centrifugal separation step S4, a washing step S5, and a centrifugal separation step S6. A plating solution includes various components corresponding to the plating to be formed, and at least part of the components are dissolved as electrolytes in the plating solution. A plating solution after use as the plating bath includes metal particles which have been by-produced in the bath during the process of plating of a member or another article to be plated. The plating solution for nickel-based plating formation after use includes nickel-based alloy particles. The metal particles are coarse as compared with nanodiamond primary particles and other components in the plating solution. The method according to the embodiment is a method for recovering nanodiamond particles from the plating solution as above.

The filtration step S1 is the step of subjecting a plating solution to a filtration treatment, where the plating solution has been used typically as the plating bath in the plating forming method. Specifically in this step, the plating solution is allowed to pass through a filtration means (filtration device) such as filtration meshes and filters. The filtration means may have a fractionation size of typically 50 µm or less, preferably 30 µm or less, more preferably 20 µm or less, furthermore preferably 10 µm or less, and still more preferably 5 µm or less. The filtration treatment in this step enables the subsequent step and downstream steps to be performed after removing metal particles having particle sizes at a certain level or greater from the plating solution. The filtration step S1 or the filtration treatment, when performed, is advantageous for performing the nanodiamond recovery operation more efficiently.

The static separation step S2 is the step of separating the plating solution into a precipitated fraction and a supernatant fraction by a standing treatment, and collecting the precipitated fraction, where the plating solution contains nanodiamond particles dispersed as primary particles and metal particles. The plating solution to be subjected to this step includes nanodiamond particles dispersed as primary particles, part of metal particles by-produced in the plating process, and other components in the form typically of electrolytes. In the step, the plating solution is subjected to a standing treatment to fractionate a precipitated fraction (sedimentary fluid) including settled nanodiamond particles and metal particles. Specifically, initially, the plating solution is left standing in a predetermined chamber. From the viewpoint of providing sufficient solid-liquid separation, the plating solution is left standing for preferably 5 hours or longer, more preferably 10 hours or longer, and furthermore preferably 15 hours or longer. The plating solution, as undergone the standing, is separated into a precipitated fraction and a supernatant fraction. In the step, next, the precipitated fraction and the supernatant fraction are separated from each other by decantation, from which the precipitated fraction (sedimentary fluid) is collected, where the precipitated fraction includes nanodiamond particles and metal particles both being enriched.

The washing step S3 is the step of combining and washing, with water, the precipitated fraction resulting from the static separation step S2. Specifically, in this step, the precipitated fraction, in which nanodiamond particles and metal particles are enriched in the upstream step(s), is combined with, and suspended in or mixed with, pure water. The pure water is added in a volume typically 2 to 10 times the volume of the precipitated fraction. The mixing (stirring) may be performed for typically one minute or longer, preferably 5 minutes or longer, and more preferably 10 minutes or longer.

The centrifugal separation step S4 is the step of separating a solution (fluid) undergone the washing step S3 into a precipitated fraction and a supernatant fraction by a centrifugal separation treatment, and collecting the precipitated fraction. In this step, initially, the solution undergone the washing step S3 is subjected to solid-liquid separation by a centrifugal separation treatment using a centrifugal separator. This causes the solution to give a precipitated fraction and a supernatant fraction. In the centrifugal separation treatment in the step, coarse metal particles in the solution are liable to settle out. Nanodiamond primary particles in the solution are also liable to settle out in the centrifugal separation treatment, as triggered by the centrifugal action. This is because the nanodiamond primary particles in this treatment are in a relatively unstable dispersed state in such a chemical environment where significant amounts of electrolytes still remain or are dissolved in the solution (fluid). Accordingly, the precipitated fraction resulting from the centrifugal separation treatment in the step mainly includes nanodiamond particles and metal particles, whereas the supernatant fraction mainly includes other components in the form typically of electrolytes. From the viewpoint of providing sufficient solid-liquid separation, the centrifugation in the centrifugal separation treatment in the step is performed at a force of preferably 1000 × g or more, more preferably 2000 × g or more, and furthermore preferably 3000 × g or more; for a time of preferably one minute or longer, more preferably 10 minutes or longer, and furthermore preferably 30 minutes or longer. In the step, next, the precipitated fraction and the supernatant fraction are separated by decantation, from which the precipitated fraction, which includes nanodiamond particles and metal particles, is collected.

The washing step S5 is the step of combining and washing, with water, the precipitated fraction resulting from the centrifugal separation step S4. Specifically in this step, the precipitated fraction, which mainly includes nanodiamond particles and metal particles, is combined with, and suspended in or mixed with pure water. The pure water is added in a volume typically 1 to 10 times the volume of the precipitated fraction. The mixing (stirring) may be performed for typically one minute or longer, preferably 5 minutes or longer, and more preferably 10 minutes or longer.

The centrifugal separation step S6 is the step of separating a fluid undergone the washing step S5 into a precipitated fraction and a supernatant fraction by a centrifugal separation treatment, and collecting the supernatant fraction. In this step, initially, the fluid undergone the washing step S5 is subjected to solid-liquid separation by a centrifugal separation treatment using a centrifugal separator. This causes the fluid to give a precipitated fraction and a supernatant fraction. In the centrifugal separation treatment in the step, coarse metal particles are liable to settle out. In contrast, nanodiamond primary particles resist settling out in this centrifugal separation treatment. This is because the nanodiamond primary particles in this treatment are in a chemical environment from which most of electrolytes have been removed by the static separation step S2 and by the centrifugal separation treatment in the centrifugal separation step S4, and such nanodiamond primary particles tend to be separated from each other and to still remain in a dispersed state as colloidal particles. Accordingly, the precipitated fraction resulting from the centrifugal separation treatment in this step mainly includes metal particles, and the supernatant fraction mainly includes nanodiamond primary particles. From the viewpoint of providing sufficient solid-liquid separation, the centrifugation in the centrifugal separation treatment in the step is performed at a force of preferably 1000 × g or more, more preferably 2000 × g or more, and furthermore preferably 3000 × g or more, for a time of preferably one minute or longer, more preferably 5 minutes or longer, and furthermore preferably 10 minutes or longer. In the step, next, the precipitated fraction and the supernatant fraction are separated by decantation, from which the supernatant fraction including nanodiamond primary particles is collected.

Thus, nanodiamond particles can be recovered from the plating solution after use, where the plating solution contains nanodiamond particles dispersed as primary particles.

Metal particles by-produced in the plating bath, if mixing with a fresh plating bath prepared for another plating treatment, may adversely affect the plating reaction and/or plating growth using this plating bath. To eliminate or minimize this, there may be taken an action of dissolving by-produced metal particles included in a plating solution after use by an acid treatment, in recycling of the plating solution and/or in a regeneration treatment of plating solution components. However, such an acid treatment often impedes nanodiamond primary particles from dispersing and is disadvantageous for recovering nanodiamond primary particles, without agglutination, from the plating solution. The method according to the embodiment does not require such an acid treatment, in the isolation of nanodiamond primary particles from metal particles.

With the nanodiamond recovering method, which has the configuration as described above with reference to FIG. 3, nanodiamond particles can be recovered in a state suitable for reuse from a plating solution in the above manner, where the plating solution has been used for the formation of a composite plating containing nanodiamond particles. Specifically, the method according to the embodiment is suitable for recovering, from a plating solution, nanodiamond particles in such a state that nanodiamonds are dispersed as primary particles and that the recovered nanodiamond particles have a lower content of by-produced metal particles.

FIG. 4 is a schematic enlarged view of a ND dispersion Z, which is a nanodiamond dispersion according to an embodiment and including nanodiamond primary particles recovered in the above manner. The ND dispersion Z includes ND particles 12 and a dispersion medium 13, where the ND particles 12 are the recovered nanodiamond particles. The ND particles 12 are separated from each other and are dispersed as colloidal particles in the dispersion medium 13. The dispersion medium 13 preferably includes 50 mass percent or more of water. In this embodiment, the dispersion medium 13 is water.

The ND particles 12, which are recovered by the method described above with reference to FIG. 3, have a particle diameter D50 (median diameter) of preferably 4 to 9 nm in the aqueous dispersion. The configuration as above is advantageous for reusing the ND particles 12 recovered by the method typically as a plating solution component. The particle diameter D50 can be measured typically by dynamic light scattering technique.

The recovered ND particles 12, when in a powdery state, have a nickel content of preferably 10000 ppm by mass or less, more preferably 8000 ppm by mass or less, furthermore preferably 5000 ppm by mass or less, and still more preferably 1000 ppm by mass or less. The configuration as above is advantageous for reusing the ND particles 12 recovered by the method typically as a plating solution component for nickel-based plating formation.

In the nanodiamond recovering methods, the plating solution is preferably alkaline. The alkaline plating solution has a pH of typically 8 to 11. The ND particles 12 to be recovered preferably exhibit a zeta potential of -60 to -20 mV, and more preferably -50 to -30 mV, in an aqueous dispersion having a nanodiamond concentration of 0.2 mass percent and a pH of 9. These configurations are advantageous for restraining or avoiding the aggregation of nanodiamond particles.

### Examples

The present invention will be illustrated in further detail with reference to an example below. It should be noted, however, that the example is by no means intended to limit the scope of the present invention.

### Plating Formation

As a member on which a plating was to be formed, a copper sheet (purity of 99.9%, 40 mm long by 30 mm wide by 0.1 mm thick) was degreased and subsequently washed with water. This member was initially subjected to a pretreatment step S1' as follows. Specifically, the member was initially immersed in 100 ml of an acid treatment chemical at room temperature for 2 minutes (acid treatment). The acid treatment chemical had been prepared by diluting concentrated hydrochloric acid (12 mol/L) two-fold with pure water. Next, the member undergone the acid treatment was washed with water, and immersed in about 100 ml of a functionalization chemical at room temperature for one minute (functionalization). The functionalization chemical had been prepared by adding 100 mg of tin chloride dihydrate (SnCl₂·2H₂O) and 100 µl of concentrated hydrochloric acid (12 mol/L) to 100 ml of pure water. Next, the member undergone the functionalization was washed with water and immersed in about 100 ml of a catalyzation chemical at room temperature for one minute (catalyzation). The catalyzation chemical had been prepared by adding 10 mg of palladium chloride (PdCl₂) and 10 µl of concentrated hydrochloric acid (12 mol/L) to 100 ml of pure water.

The member undergone the pretreatment step S1' was washed with water, and subsequently subjected to a plating step S2'. Specifically, the member was immersed in 100 ml of a plating bath, while feeding air, which is an oxygen-containing gas, to the plating bath by bubbling, and while stirring the plating bath with a magnetic stirrer. The plating bath used herein was a plating solution containing 0.1 mol/L of nickel sulfate, 0.15 mol/L of sodium phosphinate, 0.3 mol/L of sodium citrate, and 5 g/L of nanodiamond particles dispersed as primary particles. The plating solution had a pH of 10.0 as adjusted by the addition of an aqueous sodium hydroxide solution. A feedstock of nanodiamond primary particles used herein for the preparation of the plating solution was a nanodiamond dispersion D prepared in the after-mentioned manner. This step was performed so that the plating bath was at a temperature of 75°C, the air was fed to the plating bath at a rate of 0.15 L/min, and the member was immersed in the plating bath for a time of 90 minutes. With the step, a plating about 2 µm thick was formed.

Next, an aftertreatment step S3' was performed. Specifically, the member bearing the plating thereon was washed with water, and dried.

Thus, the nanodiamond-containing plating (plating M, about 2 µm thick) was formed on the copper member, where the plating included a nickel-phosphorus alloy matrix, and nanodiamond primary particles dispersed in the matrix. The plating M had a nanodiamond content of 0.9 mass percent. The nanodiamond content (in mass percent) of the plating can be calculated from two dry masses, one is the dry mass of the formed plating, and the other is the dry mass of nanodiamond particles as precipitates resulting from dissolving the plating in nitric acid to give a solution, and separating the solution by centrifugal sedimentation to give precipitates, and collecting the precipitates.

### Preparation of Nanodiamond Dispersion D

Initially, 200 g of an air-cooled detonation nanodiamond soot (having nanodiamond primary particle diameters of 4 to 8 nm, supplied by Daicel Corporation) as a nanodiamond crude product were combined with 2 L of 10 mass percent hydrochloric acid to give a slurry, and the slurry was subjected to a heat treatment under reflux at normal atmospheric pressure for one hour (acid treatment for nanodiamond purification). The heating in the acid treatment was performed at a temperature of 85°C to 100°C. Next, after being cooled, solids (including nanodiamond agglutinates and soot) were washed with water by decantation. The water washing of the solids by decantation was repeated until the pH of a sedimentary fluid became from a low pH up to 2. Next, an oxidation treatment for nanodiamond purification was performed. Specifically, the sedimentary fluid after the decantation was combined with 2 L of 60 mass percent aqueous sulfuric acid solution and 2 L of 50 mass percent aqueous chromic acid solution to give a slurry, and the slurry was subjected to a heat treatment under reflux at normal atmospheric pressure for 5 hours. The heating in the oxidation treatment was performed at a temperature of 120°C to 140°C. Next, after being cooled, solids (including nanodiamond agglutinates) were washed with water by decantation. A supernatant liquid in the early stages of the water washing was colored. The water washing of the solids by decantation was repeated until a supernatant liquid became visually transparent. Next, a sedimentary fluid resulting from the decantation after the oxidation treatment was combined 1 L of 10 mass percent aqueous sodium hydroxide solution to give a slurry, and the slurry was subjected to a heat treatment under reflux at normal atmospheric pressure for one hour. The heating in this heat treatment was performed at a temperature of 95°C to 100°C. Next, after being cooled, a supernatant was removed by decantation. Next, a sedimentary fluid resulting from the decantation was combined with hydrochloric acid to adjust its pH to 2.5, solids (including nanodiamond agglutinates) in the sedimentary fluid were washed with water by centrifugal sedimentation. Specifically, a series of processes was repeated until a suspension had an electric conductivity of 64 µS/cm, where the suspension was prepared from the sedimentary fluid (or suspension) so as to have a solids concentration (nanodiamond concentration) of 6 mass percent. The processes included an operation of subjecting the sedimentary fluid or suspension to a solid-liquid separation using a centrifugal separator; a subsequent operation of separating the fluid or suspension into precipitates and a supernatant liquid; and a subsequent operation of allowing the precipitates to be combined with and suspended in ultrapure water. Next, 300 ml of the resulting slurry (having a solids concentration of 6 mass percent) undergone the water washing was subjected to a deagglutination (deaggregation) treatment using a bead mill (trade name ULTRA APEX MILL UAM-015, supplied by KOTOBUKI INDUSTRIES CO., LTD.), which serves as pulverizing equipment or dispersing equipment. This deagglutination treatment was performed for 90 minutes, so that zirconia beads (diameter: 0.03 mm) were used as a deagglutination medium and were present in a mill chamber in an amount of 60% of the capacity of the mill chamber; that a rotor was rotated in the mill chamber at a rotor pin peripheral speed of 10 m/s.; and that the slurry was circulated in the equipment at a flow rate of 10 L/hr. Next, the slurry undergone the deagglutination treatment was subjected to a classification operation (20000 × g, 10 minutes) using a centrifugal separation to remove coarse particles therefrom. A classified fluid (containing dispersed nanodiamond primary particles) resulting from the operation was subjected to a measurement and was found to have a solids concentration of 5.8 mass percent. This classified fluid was combined with ultrapure water so as to have a solids concentration of 5 mass percent and yielded a black, transparent nanodiamond dispersion (nanodiamond dispersion D) including nanodiamond primary particles dispersed as colloidal particles. The prepared nanodiamond dispersion D had a particle diameter D50 (median diameter) of 5.4 nm, an electric conductivity of 1410 µS/cm, a pH of 9.14, and a zeta potential of nanodiamond particles (at a nanodiamond concentration of 0.2 mass percent, 25°C, pH 9) of -49 mV.

### Solids Concentration

The solids concentration of the nanodiamond dispersion was calculated from a weight determined by weighing 3 to 5 g of the dispersion, and a weight determined by heating and thereby evaporating the weighed dispersion to remove water therefrom and to leave dry matter (powder), and weighing the dry matter using a precision balance.

### Median Diameter

The particle diameter D50 (median diameter) of nanodiamond particles contained in the analyte nanodiamond dispersion was a value measured by dynamic light scattering technique (noncontact backscatter mode) using an apparatus Zetasizer Nano ZS (trade name) supplied by Spectris Co., Ltd. Before the measurement, a sample nanodiamond dispersion was diluted with ultrapure water to a nanodiamond concentration of 0.5 to 2.0 mass percent, and then exposed to ultrasound using an ultrasonic cleaner, to give the analyte.

### Zeta Potential

The zeta potential of nanodiamond particles contained in the analyte nanodiamond dispersion was a value measured by laser Doppler electrophoresis using an apparatus Zetasizer Nano ZS (trade name) supplied by Spectris Co., Ltd. Before the measurement, a sample nanodiamond dispersion was diluted with ultrapure water to a nanodiamond concentration of 0.2 mass percent, and exposed to ultrasound using a ultrasonic cleaner, to give the analyte. The pH of the nanodiamond dispersion subjected to the measurement was a value measured using a pH test paper (trade name Three Band pH Test Paper, supplied by AS ONE Corporation).

### Example 1

Nanodiamond particles were recovered from the plating solution used in the plating step S2' described above in relation to the plating M formation, by performing a filtration step S1, a static separation step S2, a washing step S3, a centrifugal separation step S4, a washing step S5, and a centrifugal separation step S6 as described below. The plating solution included, in combination with nanodiamond particles, nickel sulfate, sodium phosphinate, sodium citrate, and by-produced nickel-based alloy particles resulting from the plating step S2'.

Initially, in the filtration step S1, the plating solution (about 100 ml) after use in the plating step S2' was passed through a filtration mesh (trade name Stainless Sieve (product number 5-3294-54), opening size: 20 µm, supplied by AS ONE Corporation). With this, coarse nickel-based alloy particles having particle sizes at a certain level or greater were separated from the plating solution by filtration.

Next, in the static separation step S2, a filtrate resulting from the filtration step S1 was subjected to solid-liquid separation by a standing treatment, in which the filtrate was left standing for 24 hours. A precipitated fraction and a supernatant fraction both resulting from the standing treatment were separated from each other by decantation, and the precipitated fraction (sedimentary fluid), in which nanodiamond particles and nickel-based alloy particles were enriched, was collected.

Next, in the washing step S3, the precipitated fraction resulting from the static separation step S2 was combined with, and suspended in or mixed with, pure water. The pure water was added in a volume 4 times the volume of the precipitated fraction. The mixing (stirring) was performed for 5 minutes.

Next, the solution (suspension) undergone the washing step S3 was subjected to solid-liquid separation by a centrifugal separation treatment using a centrifugal separator in the centrifugal separation step S4. The centrifugation in this centrifugal separation treatment was performed at a force of 3000 × g for 10 minutes. A precipitated fraction (mainly including nanodiamond particles and nickel-based alloy particles) and a supernatant fraction (mainly including other components in the form typically of electrolytes), both resulting from the centrifugal separation treatment, were separated from each other by decantation, from which the precipitated fraction was collected.

Next, in the washing step S5, the precipitated fraction resulting from the centrifugal separation step S4 was combined with, and suspended in or mixed with, pure water. The pure water was added in such an amount that the resulting suspension had a solids concentration of 5 mass percent. The mixing (stirring) was performed for 10 minutes. This step gave a black suspension.

Next, in the centrifugal separation step S6, the fluid (black suspension) undergone the washing step S5 was subjected to solid-liquid separation by a centrifugal separation treatment using a centrifugal separator. The centrifugation in the centrifugal separation treatment was performed at a force of 3000 × g for a time of 10 minutes. A precipitated fraction (mainly including nickel-based alloy particles) and a supernatant fraction (mainly including nanodiamond particles), both resulting from the centrifugal separation treatment, were separated by decantation, from which the black, transparent supernatant fraction (nanodiamond dispersion D') was collected.

Thus, nanodiamond particles in the form of an aqueous dispersion were recovered from the plating solution used in the plating step S2'. The nanodiamond particles contained in the nanodiamond dispersion D' were found, as a result of measurement, to have a particle diameter D50 (median diameter) of 6.5 nm. The nanodiamond dispersion D' was evaporated to dryness to give a dry powder, and the dry powder was found to have a nickel content of 8500 ppm by mass, as a result of measurement by after-mentioned inductively coupled plasma (ICP) emission spectrometry.

In addition, a plating solution was prepared by a procedure similar to that described above in relation to the plating M formation, except for using the nanodiamond dispersion D' as a feedstock for nanodiamond primary particles, instead of the nanodiamond dispersion D. Except for using this plating solution, a pretreatment step S1', a plating step S2' (at an immersion time of the member in the plating bath of 90 minutes), and an aftertreatment step S3' were performed by procedures similar to those described above in relation to the plating M. This could gave a nanodiamond-containing plating having a thickness of about 2 µm, as with the plating M. During the plating step S2', no abnormal reaction, which will be described later relating to Comparative Example 1, occurred.

### ICP Emission Spectrometry

The sample nanodiamond dispersion was heated and thereby evaporated to remove water therefrom and to leave dry matter (powder), and 100 mg of the dry matter were placed in a porcelain crucible and, as intact, subjected to dry decomposition in an electric furnace. The dry decomposition was performed in three stages, namely, a first stage at 450°C for one hour, subsequently a second stage at 550°C for one hour, and subsequently a third stage at 650°C for one hour. The residue in the porcelain crucible after the dry decomposition as above was combined with 0.5 ml of concentrated sulfuric acid and evaporated to dryness. The resulting residue remaining after evaporation to dryness was finally dissolved in 20 ml of ultrapure water. Thus, an analyte was prepared. The analyte was subjected to ICP emission spectrometry using an ICP emission spectrophotometer (trade name CIROS 120, supplied by Rigaku Corporation). The analyte was prepared so that the detection lower limit in this analysis be 50 ppm by mass. A Standard solutions for calibration curve plotting used in the analysis were prepared by appropriately diluting a mixed standard solution XSTC-22 (supplied by SPEX CertiPrep) with an aqueous sulfuric acid solution having a concentration identical to the sulfuric acid concentration of the analyte. In the analysis, the concentration of nickel in the analyte was determined by performing an operation and analysis as above on a blank crucible to give a measured value, and subtracting this measured value (blank) from the measured value on the nanodiamond dispersion analyte to be measured.

### Comparative Example 1

To recover nanodiamond particles from the plating solution used in the plating step S2' described above relating to the plating M formation, a filtration step S1, a static separation step S2, a washing step S3, and a centrifugal separation step S4 were performed by procedures similar to those in Example 1. A precipitated fraction (mainly including nanodiamond particles and nickel-based alloy particles) resulting from the centrifugal separation step S4 was combined with, and suspended in or mixed with pure water. The pure water was added in such an amount that the resulting suspension had a solids concentration of 5 mass percent. The mixing (stirring) was performed for 10 minutes. This gave a black suspension (nanodiamond-containing suspension).

Nanodiamond particles contained in the suspension were found, as a result of a measurement, to have a particle diameter D50 (median diameter) of 30 nm. The nanodiamond-containing suspension was evaporated to dryness to give a dry powder, and the dry powder was found to have a nickel content of 23000 ppm by mass, as a result of a measurement by ICP emission spectrometry. The nickel content in Comparative Example 1 was about 2.8 times the nickel content in Example 1 (8500 ppm by mass).

A plating solution was prepared by a procedure similar to that described above in relation to the plating M formation, except for using the nanodiamond-containing suspension as a feedstock for nanodiamond particles, instead of the nanodiamond dispersion D. Except for using this plating solution, a pretreatment step S1' and a subsequent plating step S2' were performed by procedures similar to those described above in relation to the plating M. As a result, about 5 minutes into the immersion of the member to be plated in the plating bath, the plating bath underwent a vigorous abnormal reaction and was self-decomposed. This is because of the presence of nickel-based alloy particles contained in the nanodiamond-containing suspension. Thus, the method according to Comparative Example 1 failed to recover nanodiamond particles in such a state as to be reusable in a plating step.

### Comparative Example 2

To recover nanodiamond particles from the plating solution used in the plating step S2' described above in relation to the plating M formation, a filtration step S1 and a static separation step S2 were performed by procedures similar to those in Example 1. Next, a precipitated fraction (sedimentary fluid including enriched nanodiamond particles and enriched nickel-based alloy particles) resulting from the static separation step S2 was combined with, and suspended in or mixed with an equivalent amount of 70 mass percent aqueous nitric acid solution. This allowed nickel-based alloy particles contained in the sedimentary fluid to be dissolved to give a solution. Next, the solution was left standing at room temperature for one hour to give a precipitated fraction and a supernatant fraction, and the precipitated fraction and the supernatant fraction were separated by decantation, form which the gray precipitated fraction (sedimentary fluid) was collected. Next, the gray precipitated fraction was combined with, and suspended in or mixed with, pure water. The pure water was added in a volume typically 4 times the volume of the precipitated fraction. The mixing (stirring) was performed for 5 minutes. The resulting suspension remained gray, cloudy. The gray suspension was then subjected to solid-liquid separation by a centrifugal separation treatment using a centrifugal separator. The centrifugation in the centrifugal separation treatment was performed at a force of 3000 × g for a time of 10 minutes. A supernatant fraction resulting from the centrifugal separation treatment was not black. In this comparative example, the addition of the aqueous nitric acid solution adversely affected the dispersing, as primary particles, of nanodiamond particles. The method according to Comparative Example 2 failed to recover nanodiamond particles in a state of being dispersed as primary particles.

As a summary of the above description, the configurations, and variations thereof, according to one or more embodiments of the present invention will be listed as appendices below.
Appendix 1: A method for recovering nanodiamond from a plating solution, the method including:
   a first centrifugal separation step of separating a plating solution into a first precipitated fraction and a first supernatant fraction by a centrifugal separation treatment, and collecting the first precipitated fraction, the plating solution containing nanodiamond particles dispersed as primary particles, and metal particles;
   a washing step of combining and washing, with water, the first precipitated fraction; and
   a second centrifugal separation step of separating a fluid undergone the washing step into a second precipitated fraction and a second supernatant fraction by a centrifugal separation treatment, and collecting the second supernatant fraction.
Appendix 2: The method according to appendix 1 for recovering nanodiamond from a plating solution, further including, upstream from the first centrifugal separation step, a filtration step of filtering the plating solution.
Appendix 3: A method for recovering nanodiamond from a plating solution, the method including:
   a static separation step of separating a plating solution into a first precipitated fraction and a first supernatant fraction by a standing treatment, and collecting the first precipitated fraction, the plating solution containing nanodiamond particles dispersed as primary particles, and metal particles;
   a first washing step of combining and washing, with water, the first precipitated fraction;
   a first centrifugal separation step of separating a fluid undergone the first washing step into a second precipitated fraction and a second supernatant fraction by a centrifugal separation treatment, and collecting the second precipitated fraction;
   a second washing step of combining and washing, with water, the second precipitated fraction; and
   a second centrifugal separation step of separating a fluid undergone the second washing step into a third precipitated fraction and a third supernatant fraction by a centrifugal separation treatment, and collecting the third supernatant fraction.
Appendix 4: The method according to appendix 3 for recovering nanodiamond from a plating solution, in which the plating solution is left standing for 5 hours or longer in the static separation step.
Appendix 5: The method according to appendix 3 for recovering nanodiamond from a plating solution, in which the plating solution is left standing for 10 hours or longer in the static separation step.
Appendix 6: The method according to appendix 3 for recovering nanodiamond from a plating solution, in which the plating solution is left standing for 15 hours or longer in the static separation step.
Appendix 7: The method according to any one of appendices 3 to 6 for recovering nanodiamond from a plating solution, further including, upstream from the static separation step, a filtration step of filtering the plating solution.
Appendix 8: The method according to one of appendices 2 and 7 for recovering nanodiamond from a plating solution, in which the filtration step employs a filtration means having a fractionation size of 50 µm or less.
Appendix 9: The method according to one of appendices 2 and 7 for recovering nanodiamond from a plating solution, in which the filtration step employs a filtration means having a fractionation size of 30 µm or less.
Appendix 10: The method according to one of appendices 2 and 7 for recovering nanodiamond from a plating solution, in which the filtration step employs a filtration means having a fractionation size of 20 µm or less.
Appendix 11: The method according to one of appendices 2 and 7 for recovering nanodiamond from a plating solution, in which the filtration step employs a filtration means having a fractionation size of 10 µm or less.
Appendix 12: The method according to one of appendices 2 and 7 for recovering nanodiamond from a plating solution, in which the filtration step employs a filtration means having a fractionation size of 5 µm or less.
Appendix 13: The method according to any one of appendices 1 to 12 for recovering nanodiamond from a plating solution, in which centrifugation is performed at a centrifugal force of 1000 × g or more in at least one of the centrifugal separation treatment in the first centrifugal separation step and the centrifugal separation treatment in the second centrifugal separation step.
Appendix 14: The method according to any one of appendices 1 to 12 for recovering nanodiamond from a plating solution, in which centrifugation is performed at a centrifugal force of 2000 × g or more in at least one of the centrifugal separation treatment in the first centrifugal separation step and the centrifugal separation treatment in the second centrifugal separation step.
Appendix 15: The method according to any one of appendices 1 to 12 for recovering nanodiamond from a plating solution, in which centrifugation is performed at a centrifugal force of 3000 × g or more in at least one of the centrifugal separation treatment in the first centrifugal separation step and the centrifugal separation treatment in the second centrifugal separation step.
Appendix 16: The method according to any one of appendices 1 to 15 for recovering nanodiamond from a plating solution, in which centrifugation is performed for one minute or longer in at least one of the centrifugal separation treatment in the first centrifugal separation step and the centrifugal separation treatment in the second centrifugal separation step.
Appendix 17: The method according to any one of appendices 1 to 15 for recovering nanodiamond from a plating solution, in which centrifugation is performed for 5 minutes or longer in at least one of the centrifugal separation treatment in the first centrifugal separation step and the centrifugal separation treatment in the second centrifugal separation step.
Appendix 18: The method according to any one of appendices 1 to 15 for recovering nanodiamond from a plating solution, in which centrifugation is performed for 10 minutes or longer in at least one of the centrifugal separation treatment in the first centrifugal separation step and the centrifugal separation treatment in the second centrifugal separation step.
Appendix 19: The method according to any one of appendices 1 to 15 for recovering nanodiamond from a plating solution, in which centrifugation is performed for 30 minutes or longer in at least one of the centrifugal separation treatment in the first centrifugal separation step and the centrifugal separation treatment in the second centrifugal separation step.
Appendix 20: The method according to any one of appendices 1 to 19 for recovering nanodiamond from a plating solution, in which the plating solution is alkaline.
Appendix 21: The method according to appendix 20 for recovering nanodiamond from a plating solution, in which the plating solution has a pH of 8 to 11.
Appendix 22: The method according to any one of appendices 1 to 21 for recovering nanodiamond from a plating solution, in which the nanodiamond particles exhibit a zeta potential of -60 to -20 mV in an aqueous dispersion having a nanodiamond concentration of 0.2 mass percent and a pH of 9.
Appendix 23: The method according to any one of appendices 1 to 21 for recovering nanodiamond from a plating solution, in which the nanodiamond particles exhibit a zeta potential of -50 to -30 mV in an aqueous dispersion having a nanodiamond concentration of 0.2 mass percent and a pH of 9.
Appendix 24: The method according to any one of appendices 1 to 23 for recovering nanodiamond from a plating solution, in which the plating solution has a composition for nickel-based plating formation.
Appendix 25: The method according to any one of appendices 1 to 24 for recovering nanodiamond from a plating solution, in which nanodiamond particles to be recovered, when in a powdery state, have a nickel content of 10000 ppm by mass or less.
Appendix 26: The method according to any one of appendices 1 to 24 for recovering nanodiamond from a plating solution, in which nanodiamond particles to be recovered, when in a powdery state, have a nickel content of 8500 ppm by mass or less.
Appendix 27: The method according to any one of appendices 1 to 26 for recovering nanodiamond from a plating solution, in which nanodiamond particles to be recovered have a particle diameter D50 of 4 to 9 nm in a nanodiamond dispersion containing the nanodiamond particles.
Appendix 28: The method according to appendix 27 for recovering nanodiamond from a plating solution, in which the nanodiamond dispersion is an aqueous nanodiamond dispersion including water as a principal component of a dispersion medium.
Appendix 29: Nanodiamond particles being recovered by the method according to any one of appendices 1 to 24 for recovering nanodiamond from a plating solution, the nanodiamond particles having, when in a powdery state, a nickel content of 10000 ppm by mass or less.
Appendix 30: Nanodiamond particles being recovered by the method according to any one of appendices 1 to 24 for recovering nanodiamond from a plating solution, the nanodiamond particles having, when in a powdery state, a nickel content of 8500 ppm by mass or less.
Appendix 31: A nanodiamond dispersion including nanodiamond particles being recovered by the method according to any one of appendices 1 to 24 for recovering nanodiamond from a plating solution; and a dispersion medium, the recovered nanodiamond particles having a particle diameter D50 of 4 to 9 nm.
Appendix 32: The nanodiamond dispersion according to appendix 31, in which the dispersion medium includes water as a principal component.
Appendix 33: The nanodiamond dispersion according to one of appendices 31 and 32, in which the recovered nanodiamond particles, when in a powdery state, have a nickel content of 10000 ppm by mass or less.
Appendix 34: The nanodiamond dispersion according to one of appendices 31 and 32, in which the recovered nanodiamond particles, when in a powdery state, have a nickel content of 8500 ppm by mass or less.

### Reference Signs List

S1 filtration step
S2 static separation step
S3, S5 washing step
S4, S6 centrifugal separation step
Z ND dispersion
12 ND particle
13 dispersion medium

## Claims

1. A method for recovering nanodiamond from a plating solution, the method comprising:
a first centrifugal separation step of separating a plating solution into a first precipitated fraction and a first supernatant fraction by a centrifugal separation treatment, and collecting the first precipitated fraction, the plating solution comprising:
nanodiamond particles dispersed as primary particles; and
metal particles;
a washing step of combining and washing the first precipitated fraction with water; and
a second centrifugal separation step of separating a fluid undergone the washing step into a second precipitated fraction and a second supernatant fraction by a centrifugal separation treatment, and collecting the second supernatant fraction.

2. The method according to claim 1 for recovering nanodiamond from a plating solution, the method further comprising, upstream from the first centrifugal separation step,
a filtration step of filtering the plating solution.

3. A method for recovering nanodiamond from a plating solution, the method comprising:
a static separation step of separating a plating solution into a first precipitated fraction and a first supernatant fraction by a standing treatment, and collecting the first precipitated fraction,
the plating solution comprising:
nanodiamond particles dispersed as primary particles; and
metal particles;
a first washing step of combining and washing the first precipitated fraction with water;
a first centrifugal separation step of separating a fluid undergone the first washing step into a second precipitated fraction and a second supernatant fraction by a centrifugal separation treatment, and collecting the second precipitated fraction;
a second washing step of combining and washing the second precipitated fraction with water; and
a second centrifugal separation step of separating a fluid undergone the second washing step into a third precipitated fraction and a third supernatant fraction by a centrifugal separation treatment, and collecting the third supernatant fraction.

4. The method according to claim 3 for recovering nanodiamond from a plating solution,
wherein the plating solution is left standing for 5 hours or longer in the static separation step.

5. The method according to one of claims 3 and 4 for recovering nanodiamond from a plating solution, the method further comprising, upstream from the static separation step,
a filtration step of filtering the plating solution.

6. The method according to any one of claims 1 to 5 for recovering nanodiamond from a plating solution,
wherein the plating solution is alkaline.

7. The method according to any one of claims 1 to 6 for recovering nanodiamond from a plating solution,
wherein the nanodiamond particles exhibit a zeta potential of -60 to -20 mV in an aqueous dispersion having a nanodiamond concentration of 0.2 mass percent and a pH of 9.

8. The method according to any one of claims 1 to 7 for recovering nanodiamond from a plating solution,
wherein the plating solution has a composition for nickel-based plating formation.

9. The method according to any one of claims 1 to 8 for recovering nanodiamond from a plating solution,
wherein nanodiamond particles to be recovered, when in a powdery state, have a nickel content of 10000 ppm by mass or less.

10. The method according to any one of claims 1 to 9 for recovering nanodiamond from a plating solution,
wherein nanodiamond particles to be recovered have a particle diameter D50 of 4 to 9 nm in a nanodiamond dispersion containing the nanodiamond particles.

11. Nanodiamond particles recovered by the method according to any one of claims 1 to 8,
the nanodiamond particles, when in a powdery state, having a nickel content of 10000 ppm by mass or less.

12. A nanodiamond dispersion comprising:
nanodiamond particles recovered by the method according to any one of claims 1 to 8; and
a dispersion medium,
the recovered nanodiamond particles having a particle diameter D50 of 4 to 9 nm.

13. The nanodiamond dispersion according to claim 12,
wherein the recovered nanodiamond particles, when in a powdery state, have a nickel content of 10000 ppm by mass or less.
